(19) **Europäisches Patentamt**
**European Patent Office**
**Office européen des brevets**

(11) Publication number: **0 344 369 B1**

(12) # EUROPEAN PATENT SPECIFICATION

(45) Date of publication of patent specification :
24.07.91 Bulletin 91/30

(51) Int. Cl.⁵ : **B60T 7/08, B23P 15/14**

(21) Application number : **88304946.2**

(22) Date of filing : **31.05.88**

(54) **Handbrake assembly.**

(43) Date of publication of application :
**06.12.89 Bulletin 89/49**

(45) Publication of the grant of the patent :
**24.07.91 Bulletin 91/30**

(84) Designated Contracting States :
**DE ES FR IT**

(56) References cited :
**CH-A- 658 815**
**DK-C- 87 414**
**GB-A- 1 437 627**
**US-A- 2 123 265**

(73) Proprietor : **METALLIFACTURE LIMITED**
**Mansfield Road**
**Redhill Nottingham NG7 8PY (GB)**

(72) Inventor : **Walters, John Edward**
**292, St. Albans Road**
**Bulwell Nottingham (GB)**

(74) Representative : **Gilding, Martin John et al**
**Eric Potter & Clarkson St. Mary's Court St.**
**Mary's Gate**
**Nottingham NG1 1LE (GB)**

## Description

The present invention relates to a handbrake assembly for a vehicle.

Many different configurations of handbrake assembly are known for use with a variety of vehicles. In many such assemblies, a pawl and ratchet arrangement is included to provide a releasable engagement between the lever of the assembly and an attachment means for the brake cable, or to provide a releasable engagement between the attachment means for the brake cable and the vehicle body, in the latter case to hold the cable in a tensioned condition.

It is important that the teeth of the ratchet in either arrangement are sharp and accurately formed so that a secure engagement with the pawl is provided. The precision machining operations necessary to make handbrakes by the heretofore known methods have been both expensive and not altogether reliable.

The present invention is intended to provide an improved handbrake assembly which allows for relatively easy manufacture of an accurately formed ratchet.

In GB-A-1437627 a cable drum for a ratchet device, for example a so-called "multi-stroke handbrake", is fabricated from two sintered components bonded together to provide the complete drum. This patent describes the manufacture of a whole ratchet wheel in a cable drum by a sintering process but does not suggest the use of a sintering process in connection with any other handbrake.

Accordingly, the present invention provides a handbrake assembly for a vehicle, the assembly comprising an attachment means to which a brake cable may be attached, a lever for applying tension to the cable via the attachment means, and a ratchet member having ratchet teeth characterised in that the ratchet member comprises a body and a sintered metal alloy insert formed bearing said ratchet teeth and fixed to the body.

Conveniently, the body of the ratchet member is formed as a pressing or stamping which is a very cheap and rapid method of manufacture ; alternatively, it may be cast.

Preferably, a portion of the toothed insert is pinched between two portions of the body, thereby holding the insert in place.

In a preferred embodiment of the present invention, the ratchet member is adapted to be fixed in relation to the vehicle and the attachment means carries a pawl to engage releasably with the teeth of the toothed insert.

So that the invention may be more readily understood, a preferred embodiment will now be described by way of example and with reference to the accompanying drawings, in which :

Figure 1 is a side elevation of an assembly in accordance with the invention ;

Figure 2 is an end elevation, looking in the direction of arrow A in Figure 1, the scale being increased in relation to Figure 1 ; and

Figure 3 is a side elevation of a portion of the assembly of Figures 1 and 2, on the same scale as Figure 2.

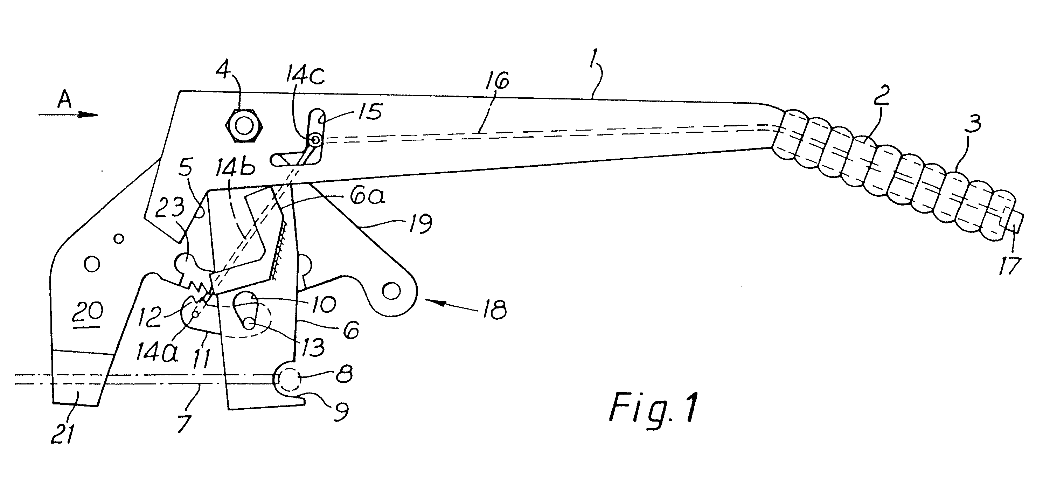

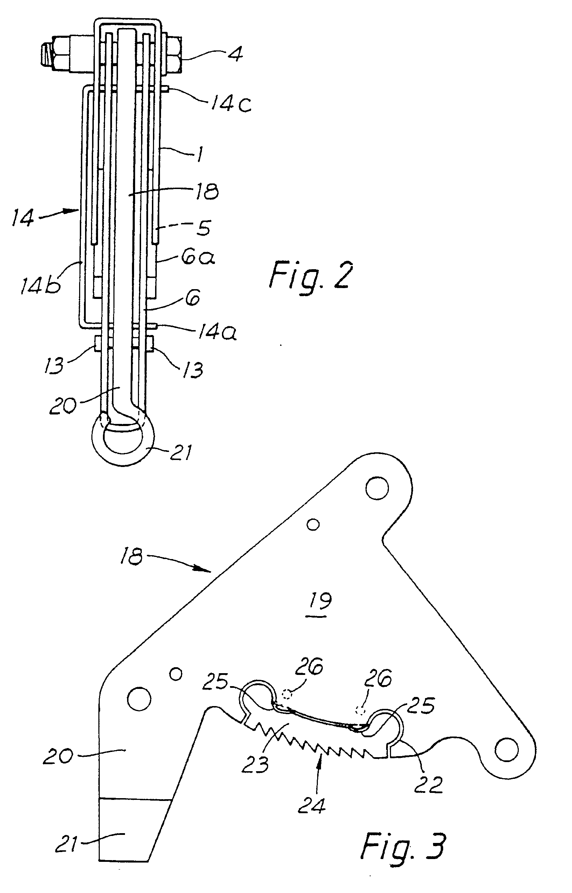

Referring first to Figure 1, the handbrake assembly comprises a main lever 1, formed as an elongate channel-section member, one end 2 of which is angled downwardly in relation to the main portion and is surrounded by, for example, a plastics grooved sleeve forming a handle 3 to enable the lever to be gripped easily by the user. The lever 1 pivots about a pivot bolt 4 which passes through the lever at a point towards the end thereof remote from the handle 3. The end of the lever 1 remote from the handle 3 is angled downwardly to provide an abutment surface 5.

Located within the channel of the lever 1 and adapted to pivot about the same pivot bolt 4, there is a cable attachment means 6, formed as a tall narrow U.

Welded to each outside side face of the attachment means 6 is a respective L-shaped abutment member 6a which defines a generally upright surface facing towards the abutment surface 5 of the lever 1.

The brake cable, shown schematically at 7, passes through the bottom of the U of the attachment means 6 and terminates in a suitable boss 8 or the like which is located within a curved portion 9 at the bottom of the attachment means 6. The attachment means 6 is provided, on each side of the U, with co-aligned keyhole slots 10, the larger diameter portion of the keyhole being above the smaller diameter portion in each case. A pawl 11 is located between the arms of the U of the attachment means 6 and has, at one end, a pair of upwardly directed teeth 12 and, towards the other end, a pair of opposed bosses 13 which engage in respective keyhole slots 10 in the attachment means 6. The pawl 11 can thus rotate, in relation to the attachment means 6, about an axis which passes through the two bosses 13 and which is generally at right angles to the plane of the attachment means 6.

As is best seen in Figure 2, a biasing rod 14 has a lower horizontal portion 14a which passes through the pawl 11 at a point adjacent the teeth 12. A main portion 14b of the biasing rod 14 extends at right angles upwardly from the lower portion 14a of the rod 14 and terminates in a right angled portion 14c which is located to travel in co-aligned L-shaped slots 15 provided in the channel section lever 1. One end of a release rod 16 is wrapped around the upper portion 14c of the biasing rod 14, with the remainder of the release rod 16 extending away therefrom within the channel of the lever 1, and terminating at a release button 16 at the handle end of the lever 1.

Within the U of the attachment means 6, there is a ratchet member 18 which is adapted to be attached to the vehicle in which the handbrake assembly is to be used. An upper end of the ratchet member 18 supports the pivot bolt 4. Extending downwardly away from the pivot bolt 4 is a generally triangular body portion 19, depending from one lower corner of which is an integral extension 20, the bottom portion of which is wrapped around on itself to form a tube for the brake cable 7 to pass through. The lower edge of the main body portion 19 of the ratchet member 18 is provided with a re-entrant profiled mouth 22 which is so shaped as to receive a correspondingly profiled insert 23, formed of a sintered metal alloy and bearing teeth 24 which are angled to the right as shown in Figures 1 and 3. The shape of the mouth 22 is such that the insert 23 can be inserted therein only by sliding it in a direction substantially at right angles to the plane of the ratchet member 18. The external profile of the insert 23 matches that of the mouth 22 closely, except that in the described assembly, at two portions 25, the insert 23 is, after forming, machined from opposed sides thereof in each case to a depth of slightly less than half the thickness of the insert 23. When the insert 23 has been inserted into the mouth 22, high local pressure is applied to the opposed faces of the ratchet member 18 at the points indicated generally at 26 (two aligned points being similarly provided on the side of the ratchet member 18 facing away from viewer in Figure 3) so as to deform the metal of the ratchet member 18 into the machined away portions 25 of the insert 23, thereby holding the insert securely in place. Preferably, however the insert is formed when sintering the remainder of the insert to provide the portions 25 so that the machining operation, which in any event is much simpler than the machining of the teeth (which is eliminated by the invention), is also avoided.

The main body 19 of the ratchet member 18 is formed as a metal pressing. It is difficult to provide sufficiently sharp teeth on such a pressing without a subsequent machining step being necessary to machine away the outside faces of the pressing to leave sharp teeth beneath. However, by choosing a suitable alloy for the sintered insert 23, sufficiently sharp teeth can be formed in a single sintering operation, and the insert can then be put in place in the body 19 of the ratchet member 18. This has been found to be an easier manufacturing process than in the prior art, where the ratchet member is pressed and then machined.

Although the overall operation of the handbrake is conventional, it will now be described briefly for the sake of completeness. The geometry of the biasing rod 14, the pawl 11 and the L-shaped slot 15 in the lever 1 is such that, as the tension in the brake cable 7 pulls the attachment means 6 to the left (as shown in Figure 1), the pawl 11 is caused to pivot about the bosses 13 such that the teeth 12 engage with the teeth 24 of the sintered insert 23. Thus, the leftward travel of the cable 7 is limited. When the user pulls upwardly on the handle 3 of the lever 1, the abutment surface 5 of the lever engages the abutment member 6a, thus causing the attachment means 6 to rotate about the pivot bolt 4 anticlockwise, thereby increasing the tension in the brake cable 7. As the attachment means 6 rotates, the teeth 12 of the pawl 11 slide over the teeth 24 of the sintered insert 23, but remain in loose contact therewith to prevent the cable 7 being released. Thus, because the cable 7 is, in this type of handbrake assembly, held against release in this way, once the user releases the lever 1, the lever will return to its rest position. When the user wishes to release the brake, the lever 1 is raised and the release button 17 is pressed, thereby causing the release rod 16 to act on the biasing rod 14 to remove the teeth 12 of the pawl 11 from the teeth 24 of the insert 23. This allows the attachment means 6 to rotate clockwise about the pivot bolt 4 to release the tension in the brake cable 7.

It will be appreciated that, in alternative brake assemblies where the lever acts on the cable via a pawl and ratchet arrangement (instead of the pawl and ratchet arrangement being used, as above, to provide a lock) the ratchet can similarly be made using a sintered metal insert as described above.

## Claims

1. A handbrake assembly for a vehicle, the assembly comprising an attachment means (6) to which a brake cable (7) may be attached, a lever (1) for applying tension to the cable (7) via the attachment means (6), and a ratchet member (18) having ratchet teeth (24) characterised in that the ratchet member (18) comprises a body (19, 20) and a sintered metal alloy insert (23) formed bearing said ratchet teeth (24) and fixed to the body (19, 20).

2. An assembly according to Claim 1 characterised in that the body (19, 20) of the ratchet member is formed of pressed or stamped metal.

3. An assembly according to Claim 2 characterised in that a portion (25) of the toothed insert is pinched between two portions of the body thereby holding the insert in place.

4. An assembly according to any one of the preceding claims wherein the ratchet member (18) is adapted to be fixed in relation to the vehicle and the attachment means (6) carries a pawl (11) to engage releasably with the teeth (24) of the toothed insert (23) to maintain tension in the cable (7).

## Patentansprüche

1. Handbremseinrichtung für ein Fahrzeug, mit einem zum Angriff an einem Bremskabel (7) bestimmten Befestigungsteil (6), mit einem Hebel (1) zum Spannen des Bremskabels (7) über das Befestigungsteil (6), und mit einem Sperrzähne (24) aufweisenden Sperrteil (18), dadurch gekennzeichnet, daß das Sperrteil (18) einen Grundkörper (19, 20) und einen Einsatzkörper (23) aus einer Sintermetallegierung aufweist, wobei der Einsatzkörper (23) die bei seiner Herstellung geformten Sperrzähne (24) trägt und fest mit dem Grundkörper (19, 20) verbunden ist.

2. Handbremseinrichtung nach Anspruch 1, dadurch gekennzeichnet, daß der Grundkörper (19, 20) des Sperrteils als metallenes Preß- oder Stanzteil ausgebildet ist.

3. Handbremseinrichtung nach Anspruch 2, dadurch gekennzeichnet, daß ein Bereich (25) des die Sperrzähne tragenden Einsatzkörpers zwischen zwei Bereichen des Grundkörpers eingeklemmt ist und so der Einsatzkörper ortsfest gehalten ist.

4. Handbremseinrichtung nach einem der vorangehenden Ansprüche 1 bis 3, dadurch gekennzeichnet, daß der Sperrteil (18) am Fahrzeug befestigbar ausgebildet ist und der Befestigungsteil (6) eine Sperrklinke (11) zum lösbaren Eingriff in die Sperrzähne (24) des Einsatzkörpers (23) beim Spannen des Bremskabels (7) trägt.

## Revendications

1. Ensemble de frein à main destiné à un véhicule, l'ensemble comprenant un moyen de fixation (6) sur lequel peut être fixé un câble de frein (7), un levier (1) destiné à appliquer la tension au câble (7) par l'intermédiaire du moyen de fixation (6), et un élément d'encliquetage (18) comportant des dents d'encliquetage (24), caractérisé en ce que l'élément d'encliquetage (18) comprend un corps (19, 20) et un insert (23) en alliage de métal fritté supportant les dents d'encliquetage (24) et asujetti au corps (19, 20).

2. Ensemble selon la revendication 1, caractérisé en ce que le corps (19, 20) de l'élément d'encliquetage est formé à partir de métal embouti ou matricé.

3. Ensemble selon la revendication 2, caractérisé en ce qu'une portion (25) de l'insert denté se trouve comprimé par pincement entre deux portions du corps, permettant ainsi de maintenir l'insert en place.

4. Ensemble selon l'une quelconque des revendications précédentes, dans lequel l'élément d'encliquetage (18) est apte à être fixé en relation au véhicule et le moyen de fixation (6) porte un cliquet (11) pouvant coopérer de façon libérable avec les dents (24) de l'insert denté (23) pour maintenir la tension dans le câble (7).

Fig.1

EP 0 344 369 B1

*Fig. 2*

*Fig. 3*